# EUROPEAN PATENT APPLICATION

(11) **EP 3 009 397 A1**
(43) Date of publication of application: **20.04.2016**
(21) Application number: 14189275.2
(22) Date of filing: 16.10.2014
(51) Int. Cl.: C01B 31/04

(54) **METHOD FOR EXTRACTING GRAPHENE OXIDE FROM A SOLUTION**

(71) Applicant: Nokia Technologies OY, 02610 Espoo (FI)
(72) Inventor: Wei, Di, Cambridge, CB3 0FA (GB); Kivioja, Jani, Cambridge, CB3 0FA (GB)
(74) Representative: Potter Clarkson LLP

(57) **Abstract**

The present disclosure provides a method of extracting graphene oxide from an aqueous solution comprising graphene oxide, which method comprises contacting the aqueous solution with an organic base and an acid. Associated apparatus as also described.

## Description

The present disclosure relates to the field of graphene oxide inks and associated apparatus. In particular, the disclosure concerns the extraction of graphene oxide from aqueous solutions comprising graphene oxide and apparatus.

Graphene oxide has recently been considered as a novel material for use in applications such as printable electronics.

Aqueous solutions comprising graphene oxide can be used to deposit a layer or layers of graphene oxide. Thus, aqueous solutions comprising graphene oxide can be used as an ink to print electronic components.

However, the toxicity of graphene and graphene oxide is not well understood and there is concern around the recycling of aqueous solutions comprising graphene oxide, such as recycling graphene oxide inks.

Graphene oxide forms a very stable aqueous suspension with an extremely low pH. Consequently, it has been found to be very difficult to both accumulate and recycle all of the graphene oxide from an aqueous solution comprising graphene oxide in a short duration of time.

One or more aspects/embodiments of the present disclosure may or may not address one or more of these issues.

The listing or discussion of a prior-published document or any background in this specification should not necessarily be taken as an acknowledgement that the document or background is part of the state of the art or is common general knowledge.

It would be advantageous to provide a method of extracting graphene oxide from an aqueous solution comprising graphene oxide, which is high yielding and more rapid than known techniques.

According to a first aspect, there is provided a method of extracting graphene oxide from an aqueous solution comprising graphene oxide, which method comprises contacting the aqueous solution with at least one positively charged organic compound.

By the term "at least one" we mean that the method may use one or more than one of the components defined. For example, the method of the invention may be conducted using one organic base and one acid, or a combination of one, two, three or four organic bases maybe used in combination with one, two, three or four acids.

By the term "graphene oxide" we mean any oxidised form of graphene; for example, graphene oxide that has been prepared by oxidising and exfoliating graphite. As used herein, the term graphene oxide encompasses graphene oxide that may comprise impurities remaining from the process used to prepare the graphene oxide, the process used to prepare the aqueous solution comprising graphene oxide and/or method of the disclosure. The graphene oxide may also comprise solvent and/or suspended or dissolved compounds present in the aqueous solution.

By the term "positively charged organic compound" we mean any organic compound that carries a positive charge on at least one atom, resulting in an overall positive charge. In a preferred aspect the positively charged organic compound has a single positive charge on at least one atom. The positively charged organic compound may be a compound having a permanent positive charge, such as a quaternary ammonium compound, or the positive charge may be generated by a chemical reaction, such as by the addition of an acid to an organic base.

Accordingly, in a further aspect there is provided a method of extracting graphene oxide from an aqueous solution comprising graphene oxide, which method comprises contacting the aqueous solution with at least one organic base and at least one acid.

In one aspect, it is preferred that the positively charged organic compound is a liquid.

The method of the present disclosure may be carried out batch-wise or continuously. Any suitable apparatus may be used, such as beakers, round bottomed flasks, static mixers, tubular reactors, stirred tank reactors or other industrial scale reactors. The apparatus used should be stable to acid and should not react with either the reactants or products within the taught ranges of temperature, pressure etc.

By the term "extracting" we mean that the graphene oxide present in the solution is converted into a form that can be physically removed from the solution. For example, the method may result in precipitation of the graphene oxide from the solution. Effective removal of the graphene oxide from the solution may be achieved by, for example, filtration and/or centrifugation.

By the term "aqueous solution" we mean a water based solution; that is a solution in which the major component is water. As used herein, the term aqueous solution encompasses water that may also comprise suspended or dissolved compounds or compositions. It is to be understood that the aqueous solution may comprise other dissolved compounds in the form of salts in addition to the graphene oxide.

Wherever the word "about" is employed herein in the context of ratios amounts (e.g. relative amounts of individual constituents in a composition or a component of a composition), temperatures, pressures, times, pH values, concentrations, it will be appreciated that such variables are approximate and as such may vary by ± 10%, for example ± 5% and preferably ± 2% (e.g. ± 1%) from the numbers specified herein.

In an aspect of the present disclosure, the aqueous solution comprising graphene oxide is a graphene oxide ink. By graphene oxide ink we mean an aqueous solution in which graphene oxide has been dispersed.

Typically, the graphene oxide used in the graphene oxide ink may be any suitable graphene oxide. For example, the graphene oxide may have been in the form of graphene oxide flakes.

The graphene oxide used in the graphene oxide ink may be produced by any method of producing graphene oxide. Known methods include, but are not limited to, graphene oxide prepared by the Hummer method (Journal of the American Chemical Society 80 (6): 1339), the Staudenmaier method (Ber. Dtsch. Chem. Ges., 1898, 31, 1481-1487) or the Hofmann method (Verlag der Zeitschrift für Naturforschung B, vol. 17, pp. 150-153, 1962).

When an organic base is used in the method of the disclosure, it is envisaged that the organic base may be any organic base comprising carbon. In the present disclosure, examples of the organic base include, but are not limited to, amines and nitrogencontaining heterocyclic compounds. Examples of preferred organic bases are amine containing compounds, such as aniline, pyridine, methyl amine, imidazole, benzimidazole, histidine and arginine.

When an acid is used in the method of the disclosure, it is envisaged that the acid may be any acid. In the present disclosure, the acid is preferably a Brønsted acid. Examples of Brønsted acids suitable for use in the method of the present disclosure include, but are not limited to, ascorbic acid, HCl, HBr, HClO₄, HNO₃ and H₂SO₄.

The method of the present disclosure can be used to extract graphene oxide from an aqueous solution comprising graphene oxide and enable the graphene oxide to be recovered and re-used.

In order for the extracted graphene oxide to be re-used, the method of the present disclosure may also comprise a step in which the solution produced from contacting the aqueous solution comprising graphene oxide with an organic base and an acid is filtered to remove the graphene oxide, for example, in the form of a precipitated solid.

In an aspect of the disclosure the graphene oxide, for example, in the form of a precipitated solid may be re-used without any further purification.

In another aspect, the graphene oxide, for example, in the form of a precipitated solid may be further purified using such techniques known in the art. For example, the precipitated solid may be washed and/or dried.

In a further aspect, the present disclosure provides a method of extracting graphene oxide from an aqueous solution comprising graphene oxide, comprising the steps of:
(i) adding at least one positively charged organic compound to an aqueous solution comprising graphene oxide; and
(ii) filtering the mixture obtained.

In a preferred aspect, the present disclosure provides a method of extracting graphene oxide from an aqueous solution comprising graphene oxide, comprising the steps of:
(i) adding at least one organic base to an aqueous solution comprising graphene oxide;
(ii) adding at least one acid to the mixture obtained in (i); and
(iii) filtering the mixture obtained in (ii).

It is envisaged that any aqueous solution comprising graphene oxide may be used in the method of the present disclosure. The level of graphene oxide present in the aqueous solution will typically depend on the intended use of the aqueous solution comprising graphene oxide. For example, in graphene oxide inks the level of graphene oxide is typically from about 0.5 mg/mL to about 10 mg/mL, such as 1, 2, 3, 4, 5, 6, 7, 8 or 9 mg/mL.

For the avoidance of doubt, in this specification when we use the term comprising or comprises we mean that the composition or formulation or component being described must contain the listed ingredient(s) but may optionally contain one or more additional ingredients. When we use the term consisting essentially of or consists essentially of we mean that the composition or formulation or component being described must contain the listed ingredient(s) and may also contain other small (for example up to 5% by weight, or up to 1% by weight or up to 0.1% by weight) ingredients, provided that any additional ingredients do not affect the essential properties of the composition, formulation or component. When we use the term consisting of or consists of we mean that the composition, formulation or component being described must contain the listed ingredient(s) only with no detectable amounts of other ingredients.

In an aspect of the disclosure, the ratio of the percentage volume of aqueous solution comprising graphene oxide to positively charged organic compound is from about 10:0.5 to about 10:10, such as from about 10:1 or from about 10:2. For example, if the volume of aqueous solution comprising graphene oxide is about 0.5 mL, the volume of the positively charged organic compound may be about 0.1 mL or about 0.05 mL.

In a further aspect of the disclosure, the ratio of the percentage volume of aqueous solution comprising graphene oxide to organic base to acid is from about 10:0.5:0.5 to about 10:5:5, such as from about 10:1:1 or from about 10:2:2. For example, if the volume of aqueous solution comprising graphene oxide is 0.5 mL, the volume of the organic base may be 0.05 mL and the volume of acid may be 0.05 mL.

The method of the disclosure may for example extract at least about 50% by weight, more preferably about 90% by weight, and even more preferably at least about 95% by weight, for example 99% by weight of the graphene oxide in the aqueous solution.

In the method of the present disclosure the aqueous solution comprising graphene oxide can have any pH. Typically, the pH of the aqueous solution comprising graphene oxide is from about 2 to about 5, such as, from about 3 to about 4.

The method of the present disclosure can be used to extract graphene oxide from an aqueous solution comprising graphene oxide, such that the concentration of graphene oxide remaining in solution is less than about 50%. For example, less than about 90%, most preferably less than about 95%, such as less than about 99%. It would be understood by those skilled in the art that the amount of graphene oxide extracted from the aqueous solution may depend on the starting concentration of graphene oxide present.

In an aspect of the disclosure, where the positively charged organic compound is generated by the addition of an acid to an organic base, the aqueous solution comprising graphene oxide is contacted with at least one organic base before the at least one acid.

By the term "contacting", we mean that the aqueous solution and the at least one positively charged organic compound are added together in a single vessel or container. The contacting may or may not include mixing the aqueous solution and the organic base or the aqueous solution, organic base and the acid.

In a particular aspect of the disclosure, contacting means that the aqueous solution and at least one positively charged organic compound are added together in a single vehicle or container and stirred or mixed vigorously to ensure that all of the components contact as much as possible with each other.

Effective mixing techniques include, but are not limited to, shaking and/or stirring. For example, a chemical reactor may be equipped with a stirring unit to enable the solutions to be mixed on a large scale.

In the method of the disclosure, the contact time between the positively charged organic compound and the aqueous solution comprising graphene oxide will typically be from about 0.5 seconds to about 24 hours, e.g. from about 1 second to about 10 minutes, such as about 5 seconds.

Where the positively charged organic compound is generated by the addition of an acid to an organic base, the organic base is contacted with the aqueous solution comprising graphene oxide before the addition of the acid and the contact time between the aqueous solution comprising graphene oxide and the organic base will typically be less than 30 minutes. For example, from about 0.5 seconds to about 20 minutes, e.g. from about 1 second to about 1 minute.

After the aqueous solution comprising graphene oxide is contacted with the acid, the contact time between the aqueous solution comprising graphene oxide, the organic base and the acid will typically be from about 0.5 seconds to about 24 hours, e.g. from about 1 second to about 10 minutes, such as 5 seconds.

The person skilled in the art would appreciate that the contact time may vary depending on whether the contacting is being done on a laboratory scale or on a larger industrial scale and would be able to adjust the contacting times accordingly.

The method of the disclosure may be carried out at atmospheric, sub- or superatmospheric pressure, preferably atmospheric pressure.

The method of the present disclosure may be conducted at any temperature. Typically, the method of the disclosure is typically conducted at room temperature (i.e. about 25°C). However, it is to be understood that the method may be conducted at higher or lower temperatures, such as from about -40°C to about 200°C, for example from about 0°C to about 100°C or from about 20°C to about 60°C.

The pressure and the temperature at which the method of the disclosure is conducted can depend on many factors such as the positively charged organic compound used and the scale of the method. For example, if the positively charged organic compound is generated by the addition of an acid to an organic base, then some temperature control may be required in order to reduce any heat generated.

If the method is conducted on an industrial scale it may also be necessary to conduct the method at a lower temperature to reduce any heat generation.

In an aspect of the method of the disclosure, the positively charged organic compound not fully soluble in the aqueous solution. For example, typically the solubility of the positively charged organic compound in water is less than about 20 g/100 mL at 20 °C, such as less than about 15 g/100 mL at 20 °C, preferably less than about 5 g/100 mL at 20 °C.

In a further aspect of the method of the disclosure, where the positively charged organic compound is generated by the addition of an acid to an organic base, the organic base is not fully soluble in the aqueous solution. For example, typically the solubility of the organic base in water is less than about 20 g/100 mL at 20 °C, such as less than about 15 g/100 mL at 20 °C, preferably less than about 5 g/100 mL at 20 °C.

Without wishing to be bound by theory, the present inventors have found that the generation of a phase boundary between the aqueous solution and the at least one organic base before the addition of the at least one acid is advantageous for the extraction of graphene oxide from an aqueous solution comprising graphene oxide. It is believed that the generation of the phase boundary allows for effective charge separation of the graphene oxide from the aqueous solution via protonation of the at least one organic base on addition of the at least one acid, thus providing a fast and efficient separation.

Typically, the aqueous solution comprising graphene oxide will only be contacted with the at least one positively charged organic compound once. However, it is envisaged that there may be situations where it is necessary to recycle the aqueous solution in order to increase the time that the solution is in contact with the at least one positively charged organic compound to ensure a substantial amount of graphene oxide is extracted from the solution.

The method of the disclosure may also comprise a step in which the aqueous solution comprising graphene oxide is filtered prior to being contacted with the at least one positively charged organic compound. Effective filtration may be achieved, for example, by passing the solution through a medium that substantially only the liquid can pass through, such as filter paper.

The present disclosure also provides the use of at least one positively charged organic compound (as previously defined) to extract graphene oxide from an aqueous solution comprising graphene oxide.

A graphene oxide product obtainable by the methods described herein is also disclosed.

According to a further aspect, there is provided an apparatus for processing an aqueous solution comprising graphene oxide as defined previously, wherein the apparatus is configured to perform any of the methods described herein.

According to a further aspect, there is provided a computer recordable medium comprising a computer programme code stored thereon, the computer recordable medium and computer programme code being configured to, when run on at least one processor of a processing apparatus, cause the processing apparatus to perform any of the methods described herein.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "processing apparatus" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The present disclosure is now illustrated, but not limited by, the following Figures and Examples.
Figure 1 shows a processing apparatus;
Figure 2 shows a flow chart illustrating an example method;
Figure 3 shows a computer-readable medium comprising a computer program configured to perform, control or enable one or more of the method steps of Figure 2.

### Detailed Description of the Figures

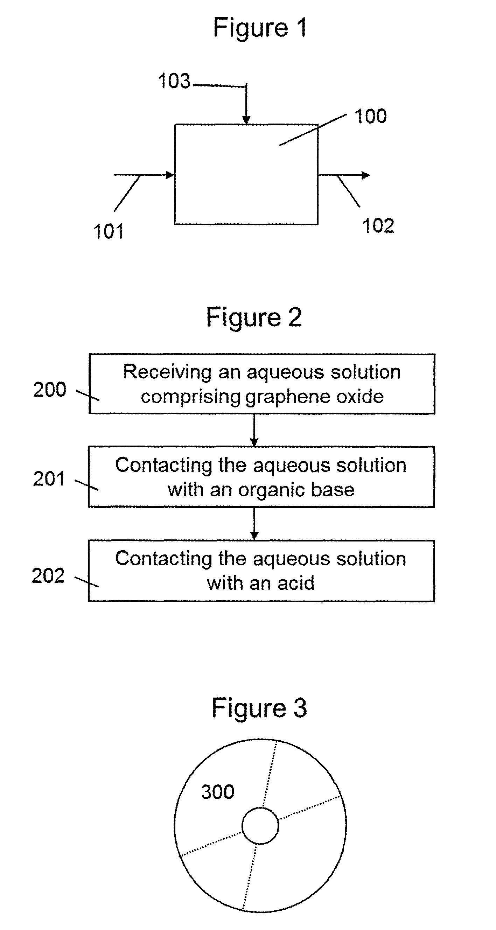

Figure 1 shows a processing apparatus 100 configured to receive a graphene oxide solution comprising graphene oxide 101 and provide an output 102 of extracted graphene oxide. The processing apparatus 100 is configured to receive an organic base and an acid shown at 103 to perform the processing of the aqueous solution of graphene oxide as shown in the flow chart of Figure 2. The processing apparatus may comprise a controller. The controller may control metering apparatus to contact the aqueous solution of graphene oxide with an organic base and an acid.

The main steps 200-202 of a method of extracting graphene oxide from a solution comprising graphene oxide and of the operation of the apparatus of Figure 1 is shown schematically in Figure 2.

Figure 3 illustrates schematically a computer/processor readable medium 300 providing a computer program according to one embodiment. In this example, the computer/processor readable medium 300 is a disc such as a digital versatile disc (DVD) or a compact disc (CD). In other embodiments, the computer/processor readable medium 300 may be any medium that has been programmed in such a way as to carry out an inventive function. The computer/processor readable medium 300 may be a removable memory device such as a memory stick or memory card (SD, mini SD, micro SD or nano SD).

The computer program may comprise computer code configured to perform, control or enable one or more of the method steps 200-202 of Figure 2.

### Example 1

A Method of Extracting Graphene Oxide from an Aqueous Solution using Aniline and HCl.

Aniline (0.05 ml, 0.0005mol) was added to a beaker containing 1 mg/mL graphene oxide ink (0.5ml). 3.5M hydrochloric acid (0.05 ml) was then added. The resulting solution was shaken vigorously for 1 minute to ensure thorough mixing. The solution was then filtered to remove the solid from the solution.

## Claims

1. A method of extracting graphene oxide from an aqueous solution comprising graphene oxide, which method comprises contacting the aqueous solution with the at least one positively charged organic compound.

2. A method according to claim 1, comprising the additional step of filtering the aqueous solution after contacting with the at least one positively charged organic compound.

3. A method according to claim 1, comprising the steps of:
(i) adding the at least one positively charged organic compound to the aqueous solution comprising graphene oxide; and
(ii) filtering the mixture obtained.

4. The use of at least one positively charged organic compound to extract graphene oxide from an aqueous solution comprising graphene oxide.

5. A method according to any one of claims 1 to 3 or the use according to claim 4, wherein the aqueous solution comprising graphene oxide is a graphene oxide ink.

6. A method or use according to any one of the preceding claims, wherein the at least one positively charged organic compound is generated by the addition of at least one acid to at least one organic base.

7. A method or use according to claim 6, wherein the at least one organic base is contacted with the aqueous solution comprising graphene oxide before the addition of at least one acid.

8. A method or use according to claims 6 or 7, wherein the at least one organic base is an amine.

9. A method or use according to claim 8, wherein the amine is an aromatic amine.

10. A method or use according to claim 9, wherein the aromatic amine is aniline.

11. A method or use according to claim 8, wherein the amine is an amino acid selected from the group consisting of lysine, arginine and histidine.

12. A method or use according to claims 6 or 7, wherein the at least one acid is a Bronsted acid, optionally selected from HCl, HBr, HClO₄, HNO₃ and H₂SO₄.

13. A method or use according to any one of the preceding claims, wherein the method reduces the concentration of graphene oxide in the aqueous solution to less than about 5µg L⁻¹, preferably less than about 1 µg L⁻¹.

14. A graphene oxide product obtainable by the method of any one of claims 1 to 3 or 5 to 13.

15. An apparatus for processing an aqueous solution comprising graphene oxide, wherein the apparatus is configured to perform the method of any one of claims 1 to 3, or 5 to 13.
